# EUROPEAN PATENT APPLICATION

(11) **EP 1 096 732 A1**
(43) Date of publication of application: **02.05.2001**
(21) Application number: 00915433.7
(22) Date of filing: 07.04.2000
(51) Int. Cl.: H04L 12/40

(54) **INFORMATION PROCESSING DEVICE AND METHOD, AND INFORMATION PROCESSING SYSTEM, AND RECORDED MEDIUM**

(30) Priority: 09.04.1999 JP 10314999
(71) Applicant: Sony Corporation, Tokyo 141-0001 (JP)
(72) Inventor: KAWAMURA, Harumi, Shinagawa-ku, Tokyo 141-0001 (JP); HORIGUCHI, Mari, Shinagawa-ku, Tokyo 141-0001 (JP)
(74) Representative: Pilch, Adam John Michael
(86) International application number: JP0002292
(87) International publication number: WO0062487

(57) **Abstract**

An information processing apparatus and method, an information processing system for sending and receiving the information via a bus between a first and a second electronic devices, the method including packeting a first time entry according to the time-of-day set at the first electronic device in a predetermined format, and transferring it via the bus to the second electronic device, setting the time-of-day of the second electronic device, based on the first time entry transferred from the first electronic device, thereby the first electronic device can specify the second electronic device, and reset the time entry according to the time-of-day which has been set at the second electronic device with the time entry according to the time-of-day which has been set at the first electronic device.

## Description

### Technical Field

The present invention relates to an information processing apparatus and method, an information processing system and a recording medium, and is suitably applicable to an AV (Audio Video) system having a plurality of AV apparatuses interconnected via an IEEE (Institute of Electrical and Electronics Engineers) 1394 bus, for example.

### Background Art

A conventional command system for controlling the AV apparatuses connected to the IEEE 1394 bus is an AV/C (Audio & Video/Control) digital interface command set.

Recently, such an AV/C command system is used to send and receive the data between the AV apparatuses and to control the AV apparatuses by providing various kinds of control commands from one AV apparatus to the other.

For example, when a plurality of AV apparatuses are controlled to cooperate at certain time such as the timer recording, a timing method of adjusting the time among these AV apparatuses, or reading the time entry from one AV apparatus and passing it to the other AV apparatus is required.

One of the timing methods has been proposed which uses a broadcast command. That is, the time entry which is referenced is provided as the broadcast command from a controller to all the AV apparatuses simultaneously, so that each of the AV apparatuses is timed according to the broadcast command.

However, such a method of using the broadcast command had a problem that other AV apparatuses connected to the IEEE1394 bus, which did not use the AV/C command, also handled this broadcast command by interruption, although there was the advantage that a lot of AV apparatuses could be timed at once with one notice from the controller.

Accordingly, in a network in which the AV apparatuses having different protocols are connected to the IEEE1394 bus, a simultaneous control with the broadcast command as described above is not realistic, and other methods are desired to implement.

### Disclosure of the Invention

The present invention has been achieved in the light of the above-mentioned problem, and it is an object of the invention to propose an information processing apparatus and method, an information system and a recording medium, wherein the first and second electronic apparatuses can be timed efficiently.

In order to attain the object, the present invention provides an information processing apparatus for forwarding the information to the other information processing apparatus connected via a bus, comprising time entry generating means for generating the time entry, and control means for packeting the time entry in a predetermined format, and transferring it via the bus to the other information processing apparatus, a packet of the format having a command area for indicating the kind of a command at a predetermined location, and a parameter area for the parameters of the command, in which the control means allocates the time entry to the parameter area of the packet.

As a result, this information processing apparatus is capable of designating the other information processing apparatus and resetting the time entry according to the time-of-day set at the other information processing apparatus with the time entry according to the time-of-day set at this information processing apparatus. Thus, this information processing apparatus and the other information processing apparatuses can be timed efficiently.

According to another aspect of the invention, there is provided an information processing apparatus for receiving a packet with a format having a command area for indicating the kind of a command and a parameter area for the parameters of the command via a bus, comprising time entry generating means for generating the time entry, receiving means for receiving the packet of the format, command extracting means for extracting the command allocated to the command area of the received packet, discriminating means for discriminating whether or not the packet is the time entry, based on the extracted command, parameter extracting means for extracting the time entry from the parameter area of the packet, when the packet is discriminated to be the time entry by the discriminating means, and time adjusting means for adjusting the time entry which the time entry generating means generates, based on the time entry extracted.

As a result, this information processing apparatus is capable of reading the time entry according to the time-of-day which has been set at the other information processing apparatus, whereby this information processing apparatus can be timed with the other information processing apparatus efficiently.

According to a further aspect of the invention, there is provided an information processing apparatus for sending and receiving the information to and from the other information processing apparatus connected via a bus, comprising time entry generating means for generating the time entry, controlling means for packeting a read command for reading the time entry according to the time-of-day which has been set at the other information processing apparatus in a predetermined format, and transferring it via the bus to the other information processing apparatus, and receiving means for receiving the time entry read out according to the read command from the other information processing apparatus, packeted in the format and transferred.

As a result, this information processing apparatus is capable of designating the other information processing apparatus and reading the time entry according to the time-of-day which has been set at the other information processing apparatus, whereby this information processing apparatus can be timed with the other information processing apparatus efficiently.

According to a further aspect of the present invention, there is provided an information processing method for forwarding the information to the other information processing apparatus connected via a bus, comprising a first step of generating the time entry, and a second step of packeting the time entry in a predetermined format, and transferring it via the bus to the other information processing apparatus, a packet of the format having a command area for indicating the kind of a command at a predetermined location, and a parameter area for the parameters of the command, said second step further comprising allocating the time entry to the parameter area of the packet.

As a result, the information processing method can be implemented in which this information processing apparatus is capable of designating the other information processing apparatus and resetting the time entry according to the time-of-day set at the other information processing apparatus with the time entry according to the time-of-day set at this information processing apparatus. Thus, this information processing apparatus and the other information processing apparatuses can be timed efficiently.

According to another aspect of the invention, there is provided an information processing method for receiving a packet with a format having a command area for indicating the kind of a command, and a parameter area for the parameters of the command via a bus, comprising a first step of generating the time entry, a second step of receiving the packet of the format, a third step of extracting the command allocated to the command area of the received packet, a fourth step of discriminating whether or not the packet is the time entry, based in the extracted command, a fifth step of extracting the time entry from the parameter area of the packet, when the packet is discriminated to be the time entry, and a sixth step of adjusting the time entry generated at the first step, based on the time entry extracted.

As a result, the information processing method can be implemented in which this information processing apparatus is capable of reading the time entry according to the time-of-day which has been set at the other information processing apparatus, whereby this information processing apparatus can be timed with the other information processing apparatus efficiently.

According to a further aspect of the invention, there is provided an information processing method for sending and receiving the information to and from the other information processing apparatus connected via a bus, comprising a first step of generating the time entry, a second step of packeting a read command for reading the time entry according to the time-of-day which has been set at the other information processing apparatus in a predetermined format, and transferring it via the bus to the other information processing apparatus, and a third step of receiving the time entry read out according to the read command from the other information processing apparatus, packeted in the format and transferred.

As a result, the information processing method can be implemented in which this information processing apparatus is capable of designating the other information processing apparatus and reading the time entry according to the time-of-day which has been set at the other information processing apparatus, whereby this information processing apparatus can be timed with the other information processing apparatus efficiently.

According to a further aspect of the present invention, there is provided an information processing system for sending and receiving the information between a first and a second electronic devices connected via a bus, comprising first controlling means, which is provided in the first electronic device, for packeting the first time entry according to the time-of-day which has been set at the first electronic device in a predetermined format, and transferring it via the bus to the second electronic device, and second controlling means, which is provided in the second electronic device, for setting the time-of-day of the second electronic device based on the first time entry transferred from the first control means.

As a result, the information processing system can be implemented in which the first electronic device is capable of designating the second electronic device and resetting the time entry according to the time-of-day set at the second electronic device with the time entry according to the time-of-day set at the first electronic device, whereby the first electronic device and the second electronic device can be timed efficiently.

According to another aspect of the invention, there is provided an information processing system for sending and receiving the information between a first and a second electronic devices connected via a bus, comprising first controlling means, which is provided in the first electronic device, for packeting a read command in a predetermined format, and transferring it via the bus to the second electronic device, and second controlling means, which is provided in the second electronic device, for packeting the time entry according to the time-of-day set at the second electronic device in the format and transferring it, based on the read command transferred from the first control means, the first control means reading the time entry transferred via the bus from the second control means.

As a result, the information processing system can be implemented in which the first electronic device is capable of designating the second electronic device and reading the time entry according to the time-of-day set at the second electronic device, whereby the first electronic device and the second electronic device can be timed efficiently.

According to another aspect of the invention, there is provided an information processing system for sending and receiving the information between a first and a second electronic devices connected via a bus, comprising first controlling means, which is provided in the first electronic device, for packeting a read command for designating a desired time unit in a predetermined format, and transferring it via the bus to the second electronic device, and second controlling means, which is provided in the second electronic device, for packeting the time entry corresponding to the designated time unit of the time-of-day set at the second electronic device in the format, based on the read command transferred from the first control means, and transferring it, the first control means updating the time entry according to the time-of-day set at the first electronic device, based on the time entry transferred via the bus from the second control means.

As a result, the information processing system can be implemented in which the first electronic device is capable of designating the second electronic device and receiving only the time entry corresponding to the designated time unit of the time-of-day set at the second electronic device to update the time entry for the time-of-day set at the first electronic device, based on the received time entry, whereby the first electronic device and the second electronic device can be timed efficiently.

According to a further aspect of the present invention, there is provided an information processing method for sending and receiving the information between a first and a second electronic devices connected via a bus, comprising a first step of packeting the first time entry according to the time-of-day which has been set in the first electronic device in a predetermined format, and transferring it via the bus to the second electronic device, and a second step of setting the time-of-day of the second electronic device based on the first time entry transferred from the first electronic device.

As a result, the information processing method can be implemented in which the first electronic device is capable of designating the second electronic device and resetting the time entry according to the time-of-day set at the second electronic device with the time entry according to the time-of-day set at the first electronic device, whereby the first electronic device and the second electronic device can be timed efficiently.

According to another aspect of the invention, there is provided an information processing method for sending and receiving the information between a first and a second electronic devices connected via a bus, comprising a first step of packeting a read command set at the first electronic device in a predetermined format, and transferring it via the bus to the second electronic device, a second step of packeting the time entry according to the time-of-day set at the second electronic device in the format, based on the read command transferred from the first electronic device, and transferring it via the bus to the first electronic device, and a third step in which the first electronic device reads the time entry transferred from the second electronic device.

As a result, the information processing method can be implemented in which the first electronic device is capable of designating the second electronic device and reading the time entry according to the time-of-day set at the second electronic device, whereby the first electronic device and the second electronic device can be timed efficiently.

According to another aspect of the invention, there is provided an information processing method for sending and receiving the information between a first and a second electronic devices connected via a bus, comprising a first step of packeting a read command for designating a desired time unit set at the first electronic device in a predetermined format, and transferring it via the bus to the second electronic device, a second step of packeting the time entry corresponding to the designated time unit of the time-of-day set at the second electronic device in the format, based on the read command transferred from the first electronic device, and transferring it via the bus to the first electronic device, and a third step in which the first electronic device updates the time entry according to the time-of-day set at the first electronic device, based on the time entry transferred from the second electronic device.

As a result, the information processing method can be implemented in which the first electronic device is capable of designating the second electronic device and receiving only the time entry corresponding to the designated time unit of the time-of-day set at the second electronic device to update the time entry for the time-of-day set at the first electronic device, based on the received time entry, whereby the first electronic device and the second electronic device can be timed efficiently.

According to a further aspect of the present invention, there is provided a recording medium which has recorded a program for executing a first step of packeting the first time entry according to the time-of-day which has been set in the first electronic device in a predetermined format, and transferring it via the bus to the second electronic device, and a second step of setting the time-of-day of the second electronic device based on the first time entry transferred from the first electronic device.

As a result, the recording medium which has recorded a program can be implemented in which the first electronic device is capable of specifying the second electronic device and resetting the time entry according to the time-of-day set at the second electronic device with the time entry according to the time-of-day set at the first electronic device, whereby the first electronic device and the second electronic device can be timed efficiently.

According to another aspect of the invention, there is provided a recording medium which has recorded a program for executing a first step of packeting a read command set at the first electronic device in a predetermined format, and transferring it via the bus to the second electronic device, a second step of packeting the time entry according to the time-of-day set at the second electronic device in the format, based on the read command transferred from the first electronic device, and transferring it via the bus to the first electronic device, and a third step in which the first electronic device reads the time entry transferred from the second electronic device.

As a result, the recording medium which has recorded the program can be implemented in which the first electronic device is capable of designating the second electronic device and reading the time entry according to the time-of-day set at the second electronic device, whereby the first electronic device and the second electronic device can be timed efficiently.

According to another aspect of the invention, there is provided a recording medium which has recorded a program for executing a first step of packeting a read command for designating a desired time unit set at the first electronic device in a predetermined format, and transferring it via the bus to the second electronic device, a second step of packeting the time entry corresponding to the designated time unit of the time-of-day set at the second electronic device in the format, based on the read command transferred from the first electronic device, and transferring it via the bus to the first electronic device, and a third step in which the first electronic device updates the time entry according to the time-of-day set at the first electronic device, based on the time entry transferred from the second electronic device.

As a result, the recording medium which has recorded the program can be implemented in which the first electronic device is capable of designating the second electronic device and receiving only the time entry corresponding to the designated time unit of the time-of-day set at the second electronic device to update the time entry for the time-of-day set at the first electronic device, based on the received time entry, whereby the first electronic device and the second electronic device can be timed efficiently.

### Brief Description of Drawings

Figure 1 is a block diagram showing the configuration of an AV system according to an embodiment of the invention.
Figure 2 is a block diagram showing the configuration of a receiving apparatus as shown in Figure 1.

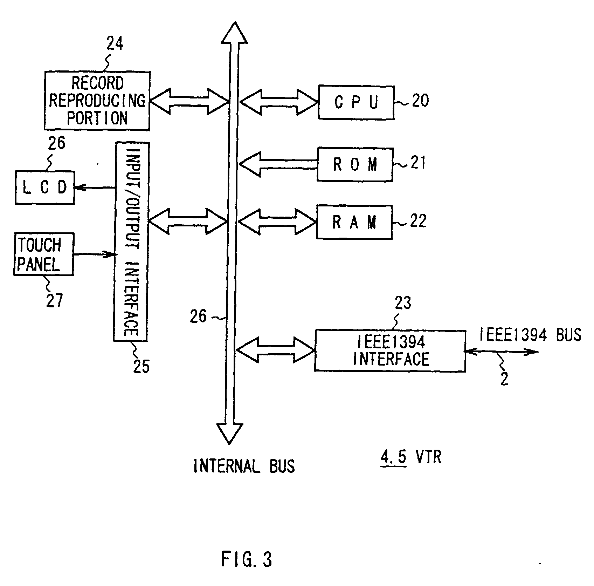

Figure 3 is a block diagram showing the configuration of a video tape recorder as shown in Figure 1.
Figure 4 is a schematic diagram showing the data structure of IEEE1394.
Figure 5 is a schematic diagram showing the kinds of command type/response.
Figure 6 is a schematic diagram showing two examples of AV/C command.
Figure 7 is a schematic diagram showing the data structure of a sub-unit ID descriptor.
Figure 8 is a schematic diagram showing the contents of a descriptor identifier.
Figure 9 is a schematic diagram showing the data structure of a date and time descriptor.
Figure 10 is a schematic diagram showing the contents of an info-type.
Figure 11 is a schematic diagram showing the contents of a data and time info.
Figure 12 is a schematic diagram showing the contents of valid flags.
Figure 13 is a flowchart for explaining a time setting procedure.
Figure 14 is a schematic diagram showing the contents of a date and time command at the time of setting the time.
Figure 15 is a flowchart for explaining a time reading procedure.
Figure 16 is a schematic diagram showing the contents of a date and time command at the time of reading the time or updating the time.
Figure 17 is a schematic diagram showing the contents of an info-type dependent when reading the time.
Figure 18 is a flowchart for explaining a periodical time updating procedure.
Figure 19 is a schematic diagram showing the contents of an info-type dependent at the time of updating the time.
Figure 20 is a schematic diagram showing the data structure of a date and time descriptor in the info-block form.
Figure 21 is a schematic diagram showing the contents of an info-block type.
Figure 22 is a schematic diagram showing the contents of a data and time info.
Figure 23 is a schematic diagram showing the contents of field valid flags.
Figure 24 is a flowchart for explaining a time setting procedure.
Figure 25 is a flowchart for explaining a time reading procedure.

### Best Mode for Carrying Out the Invention

One embodiment of the present invention will be described below in detail with reference to the drawings.

### (1) Configuration of AV system in this embodiment

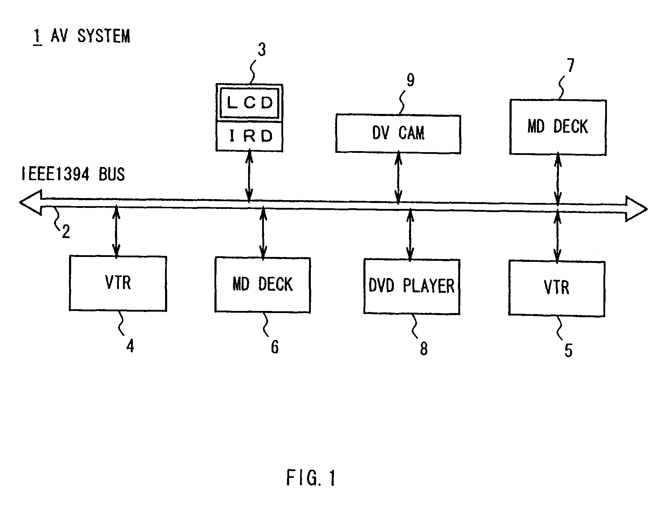

In Figure 1, reference numeral 1 denotes an AV system as a whole according to this embodiment, in which a receiving apparatus (IRD: Integrated Receiver and Decoder) 3, video tape recorders 4, 5, MD (Mini Disk) decks 6, 7, a DVD (Digital Versatile Disk) player 8, and a digital video camera 9 are interconnected via an IEEE1394 bus 2.

In this AV system 1, the video tape recorders 4, 5, the MD decks 6, 7, the DVD player 8 and the digital video camera 9 can be mutually controlled using an AV/C command set.

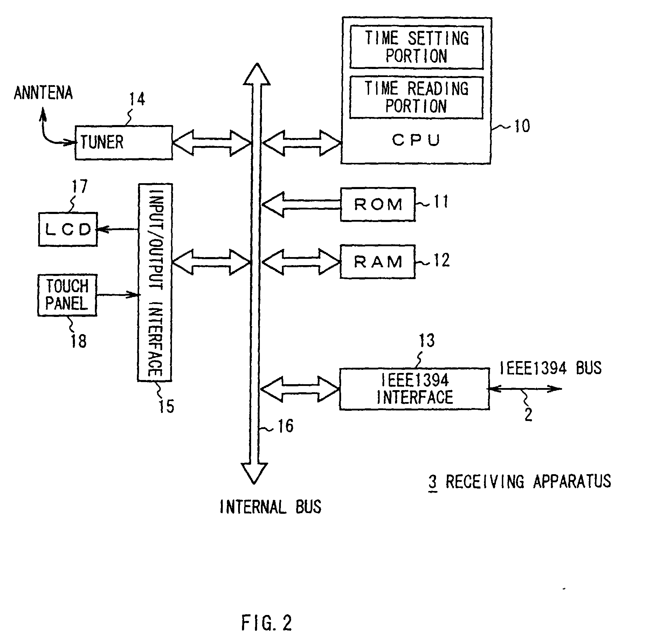

In this case, for example, in the receiving apparatus 3, a CPU (Central Processing Unit) 10, a ROM (Read Only Memory) 11 which stores a variety of programs, a RAM (Random Access Memory) 12 as a work memory of the CPU 10, an IEEE1394 interface circuit 13, a tuner 14, and an input/output interface circuit 15 are connected via an internal bus 16, an LCD (Liquid Crystal Display) 17 and a touch panel 18 being connected to the input/output interface circuit 15, shown in Figure 2.

The CPU 10 sends out the image data based on a program stored in the ROM 11 via the internal bus 16 and the input/output interface circuit 15 sequentially to the LCD 17, which displays the necessary information.

Also, the CPU 10 controls the tuner 14 and the IEEE1394 interface circuit 13, as required, based on various kinds of instructions which are input via the touch panel 18, or the commands entered via the IEEE1394 bus 2 from the video tape recorders 4, 5 or the MD decks 6, 7 (Figure 1).

As a result, in this receiving apparatus 3, when a reception instruction or command of predetermined channel is given, the tuner 14 selects the corresponding channel, and sends a video and/or sound signal obtained via the internal bus, the IEEE1394 interface circuit 13 and the IEEE1394 bus 2 sequentially to the corresponding video tape recorders 4, 5 or the MD decks 6, 7.

On the other hand, in the video tape recorders 4, 5, a CPU 20, a ROM 21, a RAM 22, an IEEE1394 interface circuit 23, a record reproducing unit 24, and am input/output interface circuit 25 are connected via an internal bus 26, an LCD and a touch panel 27 being connected to the input/output interface circuit 25, as shown in Fig, 3.

In this case, the CPU 20 sends out the image data based on a program stored in the ROM 21 via the internal bus 26 and the input/output interface circuit 25 sequentially to the LCD 26, which displays the necessary information.

Also, the CPU 20 controls the record reproducing unit 24, as required, based on various kinds of instructions which are input via the touch panel 27, or the commands entered via the IEEE1394 bus 2 from the receiving apparatus 3 or the DVD player 8 (Figure 1).

As a result, in these video tape recorders 4, 5, when a recording instruction is given, for example, a video sound signal provided via the IEEE1394 bus 2 from the receiving apparatus 3 or the DVD player 8 is accepted via the IEEE1394 interface circuit 23 and the internal bus 26 sequentially into the record reproducing unit 24, which records the video sound signal on the magnetic tape.

In these video tape recorders 4, 5, when a reproducing instruction is provided, for example, a video sound signal recorded on the magnetic tape is reproduced by the record reproducing unit 24, and sent out via the internal bus 26 and the IEEE1394 bus 2 to the corresponding video tape recorders 4, 5, or the like.

In this way, in this AV system, a plurality of AV apparatuses are interconnected via the IEEE1394 bus 2 to enable information interchange, and can be controlled mutually by issuing a variety of kinds of control commands from one AV apparatus to the other.

### (2) First embodiment

### (2-1) AV/C digital interface command set

In the Layer Model for the Open System Interconnection (OSI) as a network architecture standardized in the International Organization for Standardization (ISO), one system is allocated as an AV/C digital interface command set.

This AV/C digital interface command set is defined as a system layered upwards sequentially from a low-level IEEE1394-1995 layer to a function control protocol (FCP) layer and an AV/C command layer. This function control protocol is described in accordance with the International Electrotechnical Commission (IEC) 61883.

Further, this AV/C command layer corresponds to an application layer of the OSI layer model, and defines a protocol for recording or reproducing the signal for the video tape recorders 4, 5, the MD decks 6, 7, and the DVD player 8, or a protocol for selecting the channel within the receiving apparatus 3.

In the AV/C digital interface command set, the AV apparatus itself is logically called a unit and the apparatus governing the functions of the unit is called a subunit. The designation of command is specified to only one subunit by a subunit type and a subunit ID. When there are a plurality of subunits, the subunit can be identified by the number of subunit ID.

Each AV apparatus (unit) has a logical plug for inputting or outputting a signal from or to the external. The plugs include a serial bus plug for IEEE1394 interface, and an external plug for other interfaces than IEEE1394. Similarly, a logical plug is also defined in the subunit. By connecting the plugs of the subunits, and connecting the subunit plug and the unit plug, the signal path within the unit can be constructed.

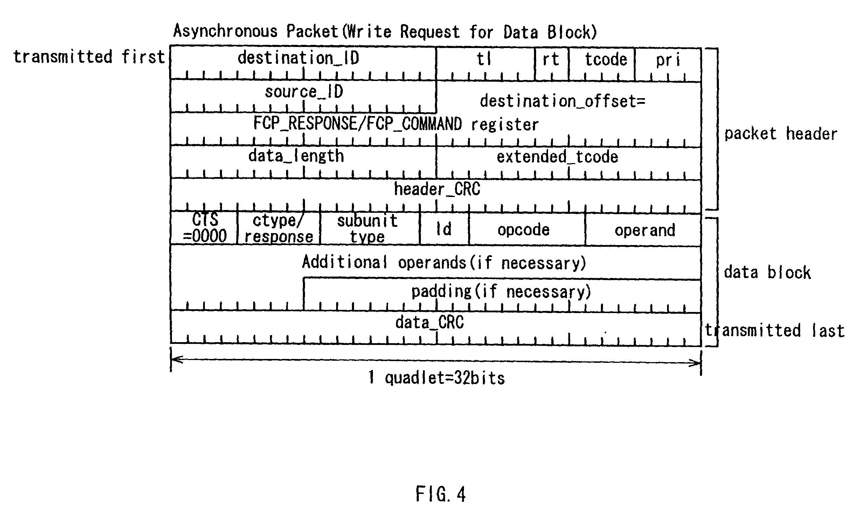

Figure 4 shows the data structure of a packet of AV/C command transferred in the asynchronous transfer mode (hereinafter referred to as an asynchronous packet) in accordance with the IEEE1394 standards. The asynchronous packet consists of a packet header composed of 32 bits (= 1 quadlet) horizontally and a data block, the AV/C command being allocated to a predetermined area within the data block.

In an upper row of the data block for this asynchronous packet, there are sequentially described a command title set (CTS), a command type/response CT/RC (Ctype/Response) representing the request type (control command or response), a subunit type for designating the function within the apparatus, an address (Id) representing the destination of command, an operation code OPC (opcode) comprised of a command, and the operands OPR (operand) 1 to 4 comprised of the parameters of the opcode. The opcode and the operands are defined for every subunit type.

In the intermediate rows of the data block for the asynchronous packet, the additional operands and padding are allocated as the fields added as required. In a lower row of the data block, a data CRC (Cyclic Redundancy Check) is allocated for the error check when transmitting the data.

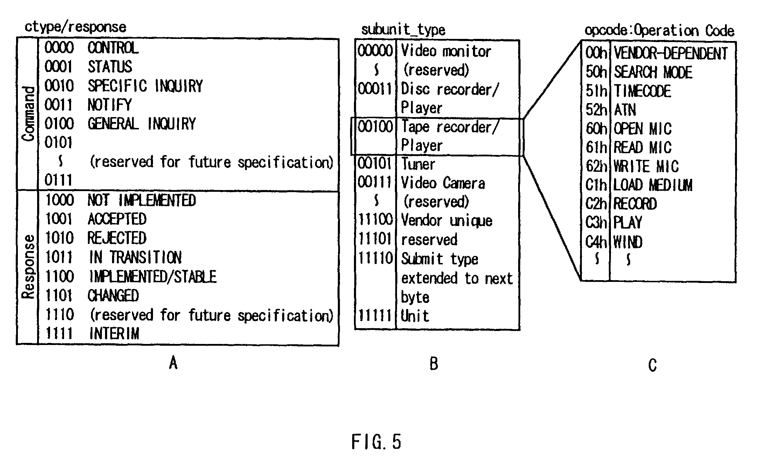

In the command type/response CT/RC of the data block, a control command and a response which is a response command are defined. As shown in Figure 5A, the control command has a command "CONTROL" for controlling the function from the external, a command "STATUS" for inquiring the status from the external, a command "SPECIFIC INQUIRY" for inquiring whether or not the control command is supported based on the opcode and the operand from the external, a command "NOTIFY" for requesting to notify the change of state to the external, a command "GENERAL INQUIRY" for inquiring whether or not the control command is supported from the external, based on only the operation code, and the reserved region "RESERVED" for future specification, which are sequentially described in order.

The response is of the same format as the control command, and provided in accordance with the type of the control command. That is, as shown in Figure 5A, the response includes a response "NOT IMPLEMENTED" for responding when any command is not implemented, a response "ACCEPTED" for responding when any command is accepted, a response "REJECTED" for responding when any command is accepted but cannot be executed, a response "IN TRANSITION" for responding when a command is currently being executed, a response "IMPLEMENTED/STABLE" for responding when a given command is acceptable, a response "CHANGED" for responding when the status is changed during the operation for a given command, a response "RESERVED" which is reserved for defining a command or response in the future, and a response "INTERIM" for responding when a wait time is needed to execute a given command, which are sequentially described in order.

Practically, the response to a command "CONTROL" is "NOT INPLEMENTED", "ACCEPTED", "REJECTED" or "INTERIM". The response to a command "STATUS" is "NOT IMPLEMENTED", "REJECTED", "IN TRANSITION", or "STABLE". Also, the response to the commands "SPECIFIC INQUIRY" and "GENERAL INQUIRY" is "IMPLEMENTED" or "NOT IMPLEMENTED". Further, the response to a command "NOTIFY" is "NOT IMPLEMENTED", "REJECTED", "INTERIM" or "CHANGED".

Figures 5A to 5C show the specific examples of tables having the identifiers (ID) and the contents for the identifiers in respect of the command type/response CT/RC, the subunit type and the opcode (OPC).

Firstly, the command type/response CT/RC includes, as the command, "CONTROL" at "0000", "STATUS" at "0001", "SPECIFIC INQUIRY" at "0010", "NOTIFY" at "0011", "GENERAL INQUIRY" at "0100" and "RESERVED" at "0101" to "0111", which are assigned sequentially, and includes, as the response, "NOT IMPLEMENTED" at "1000", "ACCEPTED" at "1001", "REJECTED" at "1010", "IN TRANSITION" at "1011", "IMPLEMENTED/STABLE" at "1100", "CHANGED" at "1101", "RESERVED" at "1110", and "INTERIM" at "1111", which are sequentially assigned, as shown in Figure 5A.

As shown in Figure 5B, the subunit type includes "Video monitor" at "00000", "Disk recorder/Player" at "00011", "Tape recorder/Player" at "00100", "Tuner" at "00101", "Video Camera" at "00111", "Vendor unique" at "11100", "Subunit type extended to next byte" at "11110", and "Unit" at "11111", which are assigned sequentially.

Further, as shown in Figure 5C, the operation code OPC (opcode) has a table of operation codes for every subunit. For example, in a case of "Tape recorder/Player", "VENDOR DEPENDENT" at "00h", "SEARCH MODE" at "50h", "TIME CODE" at "51h", "ATN" at "52h", "OPEN MIC" at "60h", "READ MIC" at "61h", "WRITE MIC" at "62h", "LOAD MEDIUM" at "C1h", "RECORD" at "C2h", "PLAY" at "C3h", and "WIND" at "C4h", are assigned sequentially.

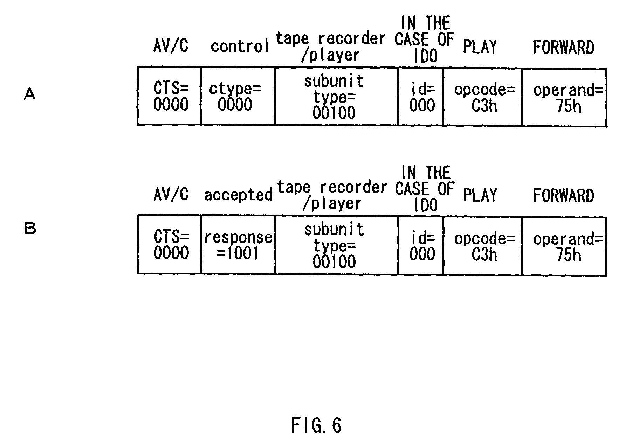

Practically, in the upper row of the data block for this asynchronous packet, there are sequentially described a command title set (CTS), a command type/response CT/RC (Ctype/Response), a subunit type, an address (Id), an operation code OPC (opcode), and an operand OPR (operand), to which respective specific identifiers are assigned. For example, when the reproduction is instructed to the video tape recorder 4 (Figure 1), the CPU 10 within the first receiving apparatus 3 sends out a command as shown in Figure 6A to the video tape recorder 4, and returns a response as shown in Figure 6B from the video tape recorder 4 to the first receiving apparatus 3, if the reproduction is executed.

In other words, a command as shown in Figure 6A is described as command title set "CTS" = "0000" to use the AV/C command set, and as "ctype" = "0000" in the command type (ctype) to use a command "CONTROL" for controlling the apparatus externally. Further, the subunit type is described as "Tape recorder/Player" = "00100", because the subunit type is the video tape recorder 4. The address (Id) is described as "Id" = "000", because it is in case of ID0, and the operation code OPC (opcode) is described as "75h" to mean the reproduction.

On the other hand, the response as shown in Figure 6B is described with the similar identifiers, except that "Response" = "1001" is given in lieu of the command type (ctype) in the command as shown in Figure 6A.

In each AV apparatus (unit), a control command and response based on the AV/C command format is provided via the IEEE1394 bus to the internal CPU (i.e., subunit). Practically, in the subunit of each AV apparatus, the data is layered, and defined as a subunit ID descriptor.

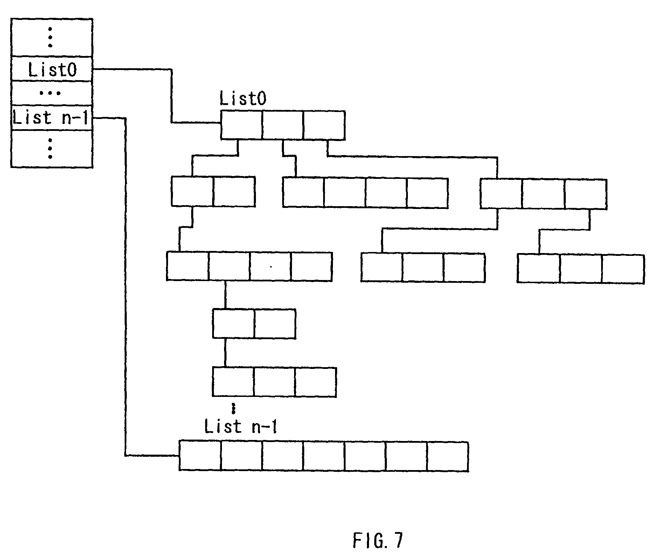

For example, , the subunit ID descriptor of the MD deck is listed as "List0", "List1", ..., "List(n-1)" for each subunit of the MD deck, as shown in Figure 7. A hierarchical structure is constructed in which "List0", "List1", ..., "List(n-1)" is at the uppermost level layer.

In this case, "List0" is a layer in which the number of MDs loaded within the MD deck is described. The contents (title of musical composition, words, etc.) are described at the lower level layer, for every MD in the uppermost level layer, and the details (passage, pointer location, etc.) are described at the still lower level layer for every contents.

This subunit ID descriptor designates a descriptor corresponding to an identification number, if the identification number which is assigned to the descriptor is specified by the descriptor identifier.

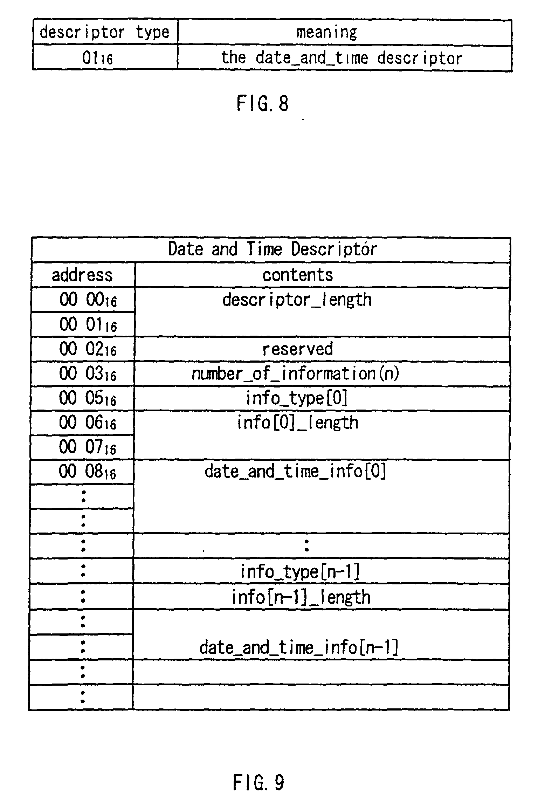

Among various descriptors, a date and time descriptor for carrying the information regarding the time in each AV apparatus is designated by the descriptor identifier as shown in Figure 8, and the contents of the corresponding date and time descriptor are enumerated as shown in Figure 9.

In Figure 9, the date and time descriptor includes "descriptor length" indicating the data length of date and time descriptor, "reserved" which represents a reserved area, "number of information" representing the number of time entries that are carried, "info type" representing the type of time entry, "info length" indicating the data length of time entry, and "data and time info" representing the time entry, which are sequentially described in order.

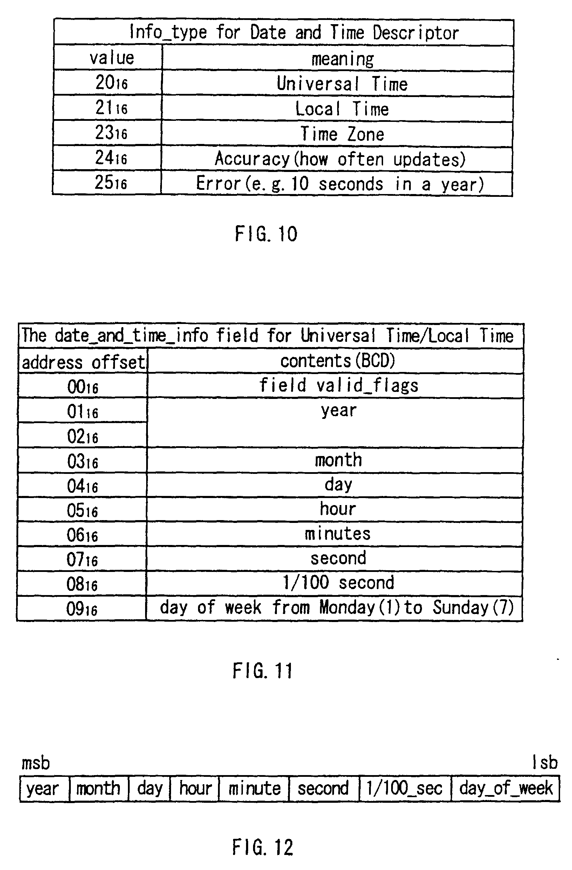

In this case, the type of time entry "info type" includes "Universal Time" representing the time entry of universal time at Greenwich, England, used as the basis for standard time throughout most of the world, "Local Time" representing the time entry in the homeland, "Time Zone" representing the zone information specified according to the difference from the universal time, "Accuracy (how often updates)" representing the accuracy of the time, and "Error (e.g., 10 seconds in a year)" representing the error of the time, which are sequentially described in order, shown in Figure 10.

Also, as shown in Figure 11, the "date and time info" includes "field valid flags" indicating whether a variety of time entries are valid or not, "year" representing the time entry in a unit of year, "month" representing the time entry in a unit of month, "day" representing the time entry in a unit of day, "hour" representing the time entry in a unit of hour, "minute" representing the time entry in a unit of minute, "second" representing the time entry in a unit of second, "1/100 second" representing the time entry in a unit of 1/100 second, "day of week from Monday (1) to Sunday (7)" representing the time entry in a unit of day of the week, which are sequentially described in order.

Of them, the "field valid flags" includes the indication as to whether or not there is a flag for the "year", "month", "day", "hour", "minute", "second", "1/100 sec", and "day of week", in which the flagged information is only effective, as shown in Figure 12.

### (2-2) Timing processing procedure

### (2-2-1) Time setting procedure RT1

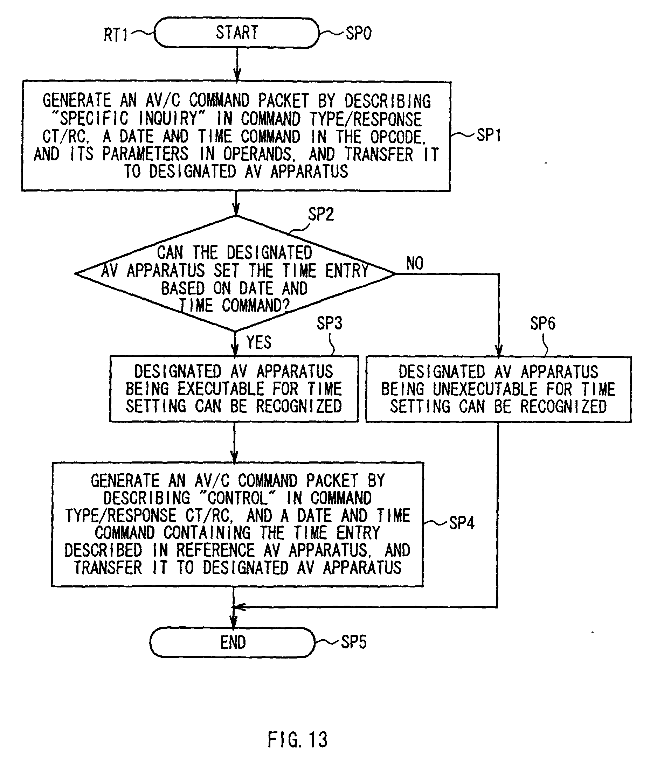

When the time entry set at one AV apparatus designated among a plurality of AV apparatuses (hereinafter referred to as a reference AV apparatus) is set at the other AV apparatus designated separately (hereinafter referred to as a designated AV apparatus), the CPU of the reference AV apparatus enters a time setting procedure RT1 in step SP0 as shown in Figure 13. Then in step SP1, the CPU describes "SPECIFIC INQUIRY" in the command type/response CT/RC, "date and time command" in the opcode, and the parameters of the command in the operand to generate an AV/C command packet (Figure 5) and transfer it via the IEEE1394 bus to the designated AV apparatus.

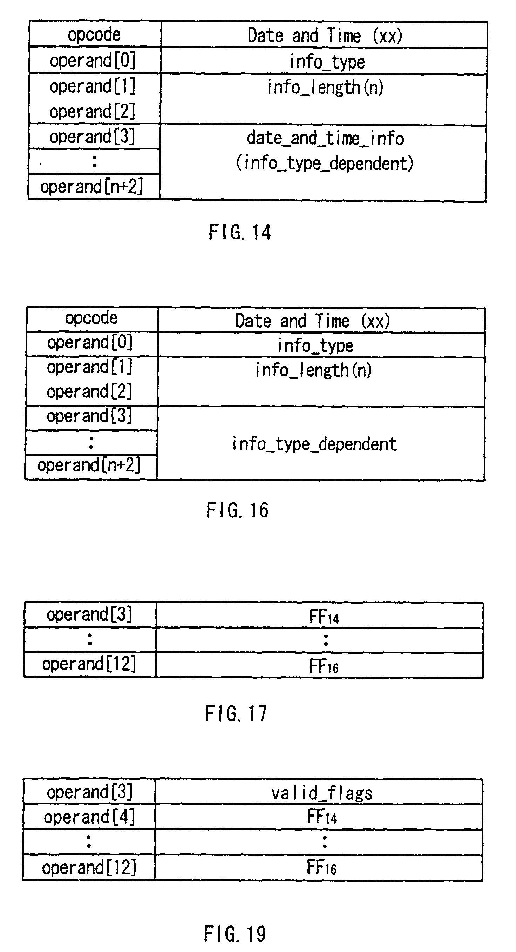

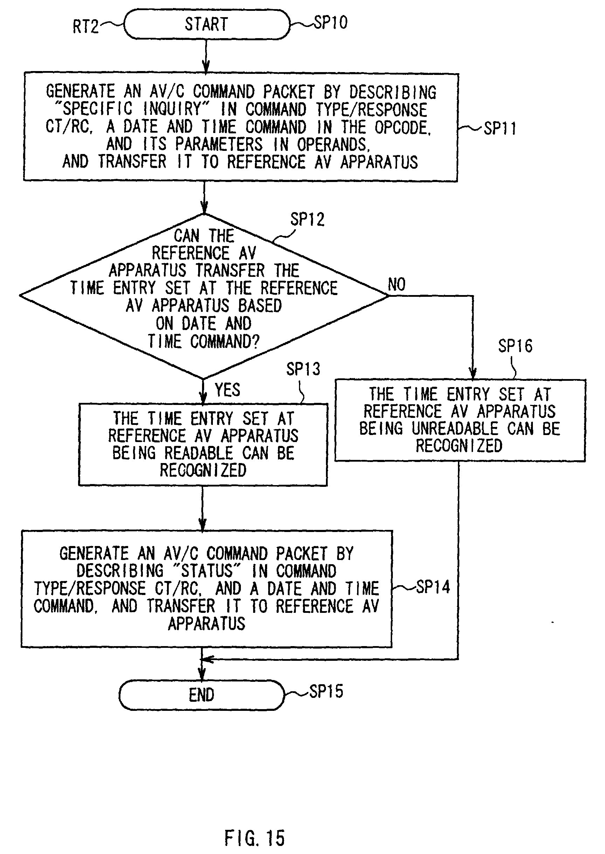

The operands which are the parameters of this date and time command include "info type", "info length", and "date and time info (info type dependent)", which are sequentially described, as shown in Figure 14.

In the date and time descriptor, a plurality of time entries are assigned and described to the operands of "date and time info (info type dependent)" for every "info type".

In this case, the time-of-day set at the reference AV apparatus, including the time entries of "year", "month", "day", "hour", "minute", "second", "1/100 sec" and "day of week", is assigned to the operands of "date and time info (info type dependent)", as shown in Figure 11.

In step SP2, the CPU of the reference AV apparatus determines whether or not the CPU of the designated AV apparatus which has received the AV/C command packet can set the time entry based on the date and time command, in accordance with a response supplied from the CPU of the designated AV apparatus (i.e., the contents of response command described in the command type/response CT/RC).

If an affirmative result is obtained at this step SP2, it is indicated that the CPU of the designated AV apparatus can execute the time setting. Then, the CPU of the designated AV apparatus generates an AV/C command packet which has described a response representing "ACCEPTED" in the command type/response CT/RC, and transfers it to the CPU of the reference AV apparatus. Then, in step SP3, the CPU of the reference AV apparatus can recognize that the designated AV apparatus can execute the time setting.

As a result, the CPU of the reference AV apparatus proceeds to step SP4, to generate an AV/C command packet by describing "CONTROL" in the command type/response CT/RC, and describing the time entries (Figure 11) according to the set time in the operands of the "date and time info (info type dependent)", and transfer it via the IEEE1394 bus 2 to the CPU of the designated AV apparatus.

As a result, the CPU of the reference AV apparatus resets the time entry set at the designated AV apparatus in accordance with the time entry based on the date and time command, and then proceeds to step SP5 to terminate the time setting procedure RT1.

On the contrary, if a negative result is obtained in step SP2, it is indicated that the CPU of the designated AV apparatus cannot execute the time setting. Then, the CPU of the designated AV apparatus generates an AV/C command packet which has described a response representing "NOT IMPLEMENTED", "REJECTED", or "IN TRANSITION" in accordance with a cause of non-execution, in the command type/response CT/RC, and transfers it to the CPU of the reference AV apparatus. Then, in step SP6, the CPU of the reference AV apparatus can recognize that the designated AV apparatus cannot execute the time setting.

As a result, the CPU of the reference AV apparatus directly proceeds to step SP5, without resetting any time entry in the CPU of the designated AV apparatus, to terminate the time setting procedure RT1.

In this way, in this AV system 1, the reference AV apparatus transfers a predetermined command to the designated AV apparatus connected via the IEEE1394 bus 2, as required. Only when the time settable conditions are satisfied, the designated AV apparatus can be controlled so that the time may be matched to the time based on the time entry set at the reference AV apparatus.

### (2-2-2) Time reading procedure RT2

When the designated AV apparatus reads the time entry set at the reference AV apparatus, the CPU of the designated AV apparatus enters the time reading procedure RT2 in step SP10 as shown in Figure 15. In step SP11, the CPU of the designated AV apparatus generates an AV/C command packet (Figure 5) by describing "SPECIFIC INQUIRY" in the command type/response CT/RC, "date and time command" in the opcode, and the parameters of the command in the operands, and transfers it via the IEEE1394 bus 2 to the CPU of the reference AV apparatus.

In this case, "info type dependent", in lieu of "date and time info", is described in the operands which are the parameters of the date and time command, as shown in Figure 16. Further, the "info type dependent" has all the operands described sequentially with hexadecimal FF represented by hexadecimal notation as shown in Figure 17.

In step SP12, the CPU of the designated AV apparatus determines whether or not the CPU of the reference AV apparatus which has received the AV/C command packet can read the set time entry and transfer it to the designated AV apparatus, based on the date and time command, in accordance with a response provided from the CPU of the reference AV apparatus.

If an affirmative result is obtained at this step SP12, it is indicated that the CPU of the reference AV apparatus can execute the time reading based on the date and time command. Then, the CPU of the reference AV apparatus generates an AV/C command packet by describing each time entry (Figure 11) according to the set time in hexadecimal FF described at each opcode of "info type dependent", and transfers it to the CPU of the designated AV apparatus. Then, in step SP13, the CPU of the designated AV apparatus can recognize that the time entry set in the reference AV apparatus can be read.

Thereafter, proceeding to step SP14, the CPU of the designated AV apparatus generates an AV/C command packet by describing the "STATUS" in the command type/response CT/RC, and describing the date and time command in the opcode, and transfers the AV/C command packet via the IEEE1394 bus 2 to the CPU of the reference AV apparatus.

As a result, the CPU of the designated AV apparatus executes reading the time entry set in the reference AV apparatus, and then proceeds to step SP15 to terminate the time setting procedure RT1.

On the contrary, if a negative result is obtained in step SP12, it is indicated that the CPU of the reference AV apparatus cannot execute reading the time. Then, the CPU of the reference AV apparatus generates an AV/C command packet by describing a response representing the "NOT IMPLEMENTED", "REJECTED" or "IN TRANSITION" according to a cause of non-execution in the command type/response CT/RC, and transfers it to the CPU of the designated AV apparatus. Then, in step SP16, the CPU of the designated AV apparatus can recognize that reading the time could not be executed.

As a result, the CPU of the designated AV apparatus proceeds directly to step SP15, without reading any time entry from the CPU of the reference AV apparatus, to terminate the time reading procedure RT2.

In this way, in this AV system 1, the designated AV apparatus transfers a predetermined command to the reference AV apparatus connected via the IEEE1394 bus 2, as required. Only when the conditions where the time entry can be made public are satisfied, the designated AV apparatus can read the time entry from the reference AV apparatus and reset its own time so that the time may be matched to the time based on the time entry read from the designated AV apparatus.

### (2-2-3) Periodical time updating procedure RT3

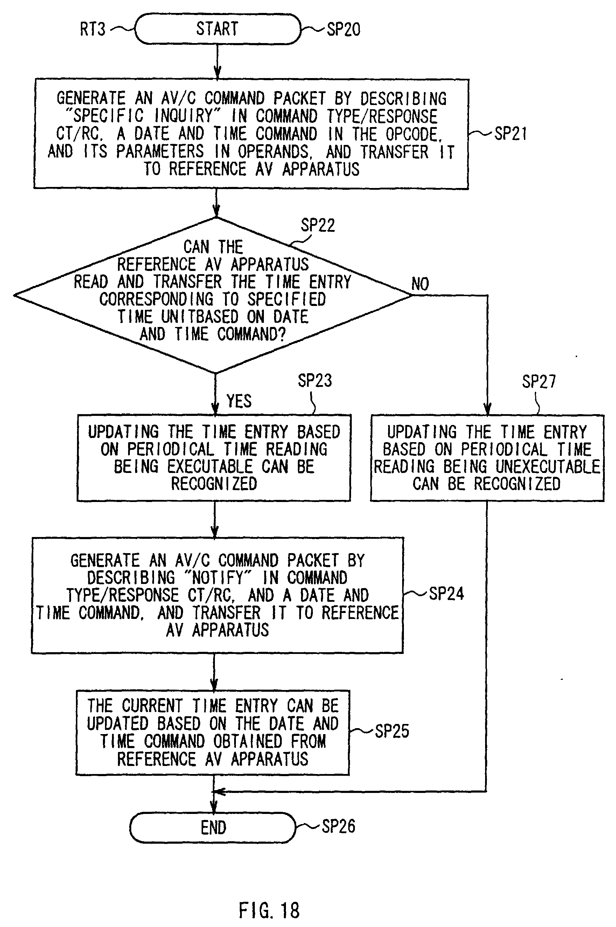

Further, when the designated AV apparatus reads periodically the time entry set in the reference AV apparatus and updates it based on the time entry, the CPU of the designated AV apparatus enters a periodical time updating procedure RT3 in step SP20 as shown in Figure 18. In step SP21, the designated AV apparatus generates an AV/C command packet (Figure 5) by describing the "SPECIFIC INQUIRY" in the command type/response CT/RC, the date and time command in the opcode, and the parameters of the command in the operands, and transfers it via the IEEE1394 bus 2 to the CPU of the reference AV apparatus.

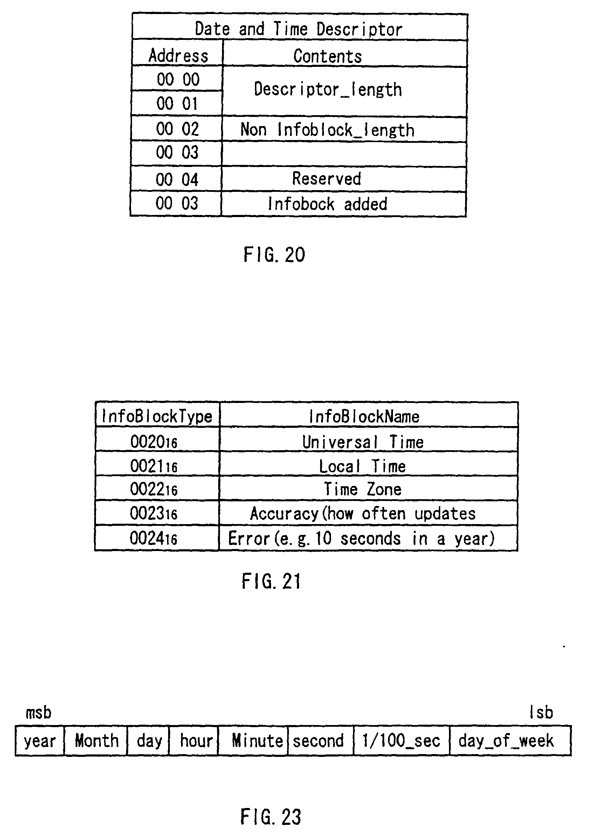

In this case, of the operands which are the parameters of the date and time command (Figure 16), the "info type dependent" is described with a valid flag at the first operand, as shown in Figure 19, and hexadecimal FF in hexadecimal notation is described in the other operands.

Then, the CPU of the designated AV apparatus sets only the flags corresponding to the time entries in a specified unit of time for updating the time, of the "valid flags" (Figure 12) including the flags for the time entries of "year", "month", "day", "hour", "minute", "second", "1/100 sec" and "day of week".

In step SP22, the CPU of the designated AV apparatus whether or not the CPU of the reference AV apparatus which has received the AV/C command packet can read the time entry corresponding to the specified unit of time among the set up time entries, and transfers it to the designated AV apparatus, based on the date and time command, in accordance with a response transferred from the CPU of the reference AV apparatus.

If an affirmative result is obtained at this step SP22, it is indicated that the CPU of the reference AV apparatus can execute reading the time based on the date and time command. Then, the CPU of the reference AV apparatus generates an AV/C command packet which has described the "INTERIM" (i.e., a wait command) in the command type/response CT/RC, and transfers it to the CPU of the designated AV apparatus. In step SP23, the CPU of the designated AV apparatus can recognize that updating the time entry can be executed based on the periodical time reading.

As a result, proceeding to step SP24, the CPU of the designated AV apparatus generates an AV/C command packet by describing the "NOTIFY" in the command type/response CT/RC, and describing the date and time command in the opcode, and transfers the AV/C command packet via the IEEE1394 bus 2 to the CPU of the reference AV apparatus.

After the elapse of a predetermined time, the CPU of the reference AV apparatus generates a date and time command by describing the "CHANGED" in the command type/response CT/RC, extracting only the time entries in a unit of time which is effective at the "valid flags" which are described in the "info type dependent" from among the current time entries, and describing them in hexadecimal FF, and transfers it to the CPU of the designated AV apparatus, as the AV/C command packet. Then, proceeding to step SP25, the CPU of the designated AV apparatus can update the current time entries based on the date and time command obtained.

Thereafter, the CPU of the designated AV apparatus directly proceeds to step SP26 to terminate the periodical time updating procedure RT3.

On the contrary, if a negative result is obtained in step SP22, it is indicated that the CPU of the reference AV apparatus cannot execute reading the designated time entry. Then, the CPU of the reference AV apparatus generates an AV/C command packet by describing a response representing the "NOT IMPLEMENTED", "REJECTED" or "IN TRANSITION" according to a cause of non-execution in the command type/response CT/RC, and transfers it to the CPU of the designated AV apparatus. Then, in step SP27, the CPU of the designated AV apparatus can recognize that updating the time entry could not be executed based on the periodical time reading.

As a result, the CPU of the designated AV apparatus proceeds directly to step S226, without receiving any time entry from the CPU of the reference AV apparatus, to terminate the periodical time updating procedure RT3.

In this way, in this AV system 1, the designated AV apparatus transfers periodically a predetermined command to the reference AV apparatus connected via the IEEE1394 bus 2. Only when the conditions where the time entry can be made public are satisfied, the designated AV apparatus can read the time entry from the reference AV apparatus and reset its own time so that the time may be matched to the time based on the time entry read from the designated AV apparatus.

### (2-3) Operation and effects of this embodiment

In the above configuration, among a plurality of AV apparatuses connected via the IEEE1394 bus 2 in this AV system 1, when the time entry set in the reference AV apparatus is set in the designated AV apparatus, the reference AV apparatus generates an AV/C command packet by describing the "CONTROL" in the command type/response CT/RC, and describing the time entry according to the reference AV apparatus in the operands which are the parameters of the opcode, and transfers the AV/C command packet to the designated AV apparatus.

Thereby, the designated AV apparatus can set the time entries according to the reference AV apparatus described in the operands based on the date and time command, and transfer a response indicating that the time entries have been set to the reference AV apparatus for recognition.

As a result, the reference AV apparatus can specify the designated AV apparatus which is an object for setting the time and reset the time entry set at present in the designated AV apparatus with the time entry according to the reference AV apparatus.

When the designated AV apparatus reads the time entry set in the reference AV apparatus, the designated AV apparatus generates an AV/C command packet by describing the "STATUS" in the command type/response CT/RC, describing the date and time command in the opcode, and describing the assigned parameter values in the operands which are the parameters of the opcode, and transfers the AV/C command packet to the reference AV apparatus.

Thereby, the reference AV apparatus generates an AV/C command packet by describing the assigned time entries set in the reference AV apparatus in the parameter values described in the operands, based on the date and time command, and transfers it to the designated AV apparatus. Consequently, the designated AV apparatus can read the obtained time entry set in the reference AV apparatus.

As a result, the designated AV apparatus can specify the reference AV apparatus that is an object for reading the time and read the time entry set at present only from the reference AV apparatus. In this way, the designated AV apparatus can reset the time entry set at present based on the time entry read from the reference AV apparatus.

Further, when the designated AV apparatus reads periodically the time entry set in the reference AV apparatus, and updates the time entry based on the read time entry, the designated AV apparatus generates an AV/C command packet by describing the "NOTIFY" in the command type/response CT/RC of the AV/C command packet, describing the date and time command in the opcode, and describing the "valid flags" and the predetermined parameter values assigned in the operands which are the parameters of the opcode, and transfers the AV/C command packet to the reference AV apparatus.

Thereby, the reference AV apparatus transfers an AV/C command packet which has described the "INTERIM" in the command type/response CT/RC to the designated AV apparatus, only when it can provide the time entry at present to the designated AV apparatus, based on the date and time command, so that the designated AV apparatus can recognize a wait state for a predetermined time.

After the elapse of a predetermined time, the CPU of the other AV apparatus generates an AV/C command packet by describing the "CHANGED" in the command type/response CT/RC, and describing only the time entries in a unit of time which is effective at the "valid flags" which are described in the operands, and transfers it to the CPU of the designated AV apparatus. Then, the CPU of the designated AV apparatus can update the current time entries, based on the time entries set in the reference AV apparatus.

As a result, the designated AV apparatus can specify the reference AV apparatus which is an object for updating the time and receive the time entry in a specified unit of time among the time entries set at present only from the reference AV apparatus. In this way, the designated AV apparatus can update the time entry set at present based on the time entry read from the reference AV apparatus.

With the above configuration, among a plurality of AV apparatuses connected via the IEEE1394 bus 2 in this AV system 1, an AV/C command packet with the time entry added are sent and received between the reference AV apparatus and the designated AV apparatus which are arbitrarily specified. Consequently, the time entry set in the reference AV apparatus can be set in the designated AV apparatus, and the designated AV apparatus can read the time entry set in the reference AV apparatus. Further, the designated AV apparatus can periodically read the time entry set in the reference AV apparatus, and update the time entry based on the read time entry. Thus, it is possible to provide an AV system 1 which enables the timing between designated AV apparatuses to be coordinated efficiently.

### (3) Second embodiment

### (3-1) AV/C digital interface command set

This second embodiment is configured in the same way as in the first embodiment, except that the description forms of descriptor in the AV/C command packet are different from the AV/C digital interface command set in the first embodiment.

That is, a block of entries (hereinafter referred to as an info block) in a predetermined unit are described sequentially within a descriptor and the type of a specified info block is recognized from the descriptor. Thus, various listed entries can be made effective in the same manner as when addressing in accordance with the command control, like the first embodiment.

Practically, various types of info blocks are sequentially described within a descriptor which the CPU of the designated AV apparatus has, and the CPU of the reference AV apparatus recognizes the type of a specified info block within the descriptor which the CPU of the designated AV apparatus has via the IEEE1394 bus 2, Thereby, the CPU of the reference AV apparatus can read and write various entries from and to the designated AV apparatus.

Herein, the date and time descriptor specified by the descriptor identifier as shown in Figure 8 is a descriptor for carrying the information regarding the time in each AV apparatus, and the contents of the date and time descriptor are described in the form of info block, as shown in Figure 20.

In Figure 20, the date and time descriptor has the "descriptor length" indicating the total data length of date and time descriptor including the added info block, "non infoblock length" indicating the total data length of list not represented by the form of info block, "reserved" which is a reserved field, and "infoblock added" for adding the info block to the addresses following "0X0005", which are described sequentially in order.

In this case, the info block added to an area of "infoblock added" includes "the Universal Time" representing the mean time of the meridian at Greenwich, England, used as the basis for standard time throughout most of the world, "Local Time" representing the time entry in the homeland, "Time Zone" representing the zone information specified according to the difference from the universal time, "Accuracy (how often updated)"representing the accuracy of the time, and "Error (e.g., 10 seconds in a year)" representing the error of the time, which are sequentially described for each type, shown in Figure 21.

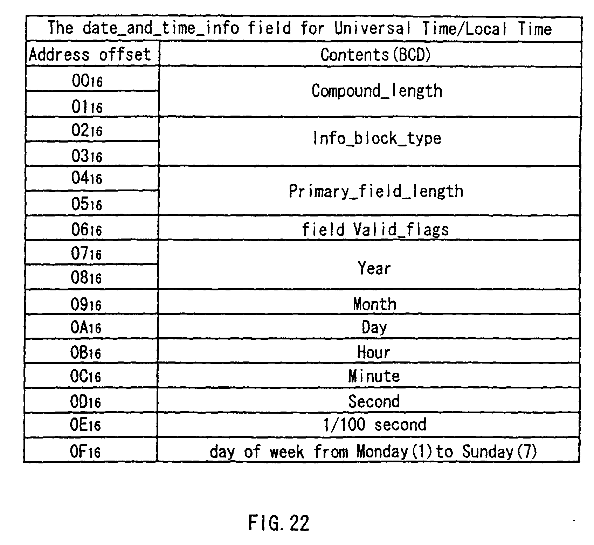

Also, as shown in Figure 22, the "date and time info" includes "Compound length" indicating the data length of overall field for the info block, "Infoblock type" for selecting each code such as "Local Time" or "universal time" from a list of info block types, "Primary Field Length" indicating the data length of overall info block at the first layer (the info block is only one layer, and the data length is up to an address offset "0X06 to 0X0F"), the "field valid flags" indicating whether a variety of time entries are valid or not, "year" representing the time entry in a unit of year, "month" representing the time entry in a unit of month, "day" representing the time entry in a unit of day, "hour" representing the time entry in a unit of hour, "minute" representing the time entry in a unit of minute, "second" representing the time entry in a unit of second, "1/100 second" representing the time entry in a unit of 1/100 second, "day of week from Monday (1) to Sunday (7)" representing the time entry in a unit of day of the week, which are sequentially described in order.

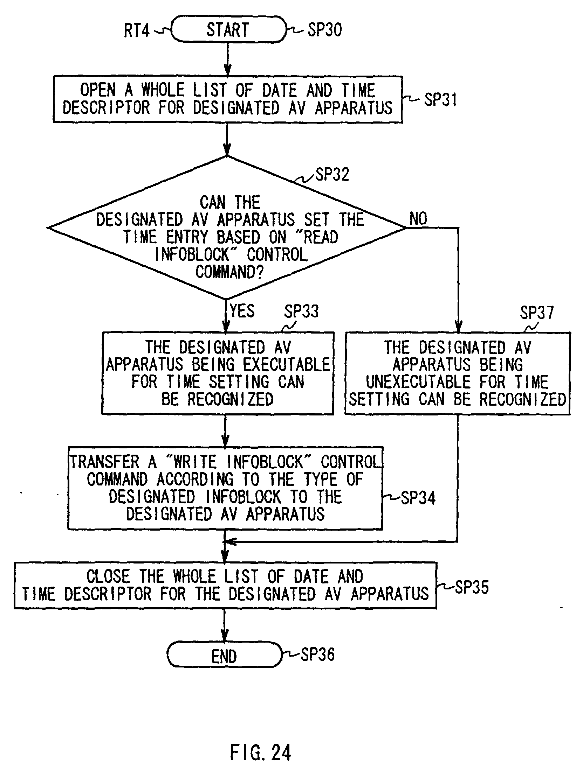

Of the "data and time info", the "field valid flags" includes the indication as to whether or not there is a flag in respects of "year", "month", "day", "hour", "minute", "second", "1/100 sec", and "day of week", in which the flagged information is effective, as shown in Figure 23.

### (3-2) Timing processing procedure

### (3-2-1) Time setting procedure RT4

When the time entry set in the reference AV apparatus among a plurality of AV apparatuses is set in the designated AV apparatus, the CPU of the reference AV apparatus enters a time setting procedure RT4 in step SP30 as shown in Figure 13. Then in step SP31, the CPU of the reference AV apparatus transfers the "OPEN DESCRIPTOR", together with the sub-function of "READ OPEN", to the designated AV apparatus, to open a whole list of the date and time descriptor for the designated AV apparatus.

Subsequently, in step SP32, the CPU of the reference AV apparatus transfers a read infoblock control command according to the type of infoblock required for setting the time via the IEEE1394 bus 2 to the designated AV apparatus. The CPU of the reference AV apparatus determines whether or not the CPU of the designated AV apparatus can set the time entry based on the infoblock control command, according to whether or not the CPU of the designated AV apparatus can read the designated infoblock from a list of the data and time descriptor.

If an affirmative result is obtained at this step SP32, it is indicated that the CPU of the designated AV apparatus can execute the time setting. Then, the CPU of the designated AV apparatus reads the infoblock representing the universal time or local time from the list, and transfers it to the CPU of the reference AV apparatus. In step SP33, the CPU of the reference AV apparatus can recognize that the designated AV apparatus can execute the time setting.

As a result, in step SP34, the CPU of the reference AV apparatus transfers a write infoblock (WRITE INFOBLOCK) control command according to the type of designated infoblock via the IEEE1394 bus 2 to the designated AV apparatus. The CPU of the reference AV apparatus sets the time entry set in the designated AV apparatus in accordance with the time entry based on the infoblock control command, and the proceeds to step SP35.

Subsequently, the CPU of the reference AV apparatus proceeds to step SP35. The CPU of the reference AV apparatus transfers the "OPEN DESCRIPTOR", together with the sub-function of "CLOSE", to the CPU of the designated AV apparatus, to close a whole list of the date and time descriptor for the designated AV apparatus. Then, the CPU of the reference AV apparatus directly proceeds to step SP36 to terminate the time setting procedure RT4.

On the contrary, if a negative result is obtained in step SP32, it is indicated that the CPU of the designated AV apparatus cannot execute the time setting. Then, the CPU of the designated AV apparatus does not transfer the designated infoblock from a list of the date and time descriptor. In step SP37, the CPU of the reference AV apparatus can recognize that the designated AV apparatus cannot execute the time setting.

As a result, the CPU of the reference AV apparatus proceeds to step SP35, without resetting any time entry in the CPU of the designated AV apparatus. The CPU of the reference AV apparatus transfers the "OPEN DESCRIPTOR", together with the sub-function of "CLOSE", to the CPU of the designated AV apparatus, to close a whole list of the date and time descriptor for the designated AV apparatus. Then, the CPU of the reference AV apparatus directly proceeds to step SP36 to terminate the time setting procedure RT4.

In this way, in this AV system 1, the reference AV apparatus transfers a predetermined infoblock control command to the designated AV apparatus connected via the IEEE1394 bus 2, as required. Only when the time settable conditions are satisfied, the designated AV apparatus can be controlled so that the time may be matched to the time based on the time entry set at the reference AV apparatus.

### (3-2-2) Time reading procedure RT5

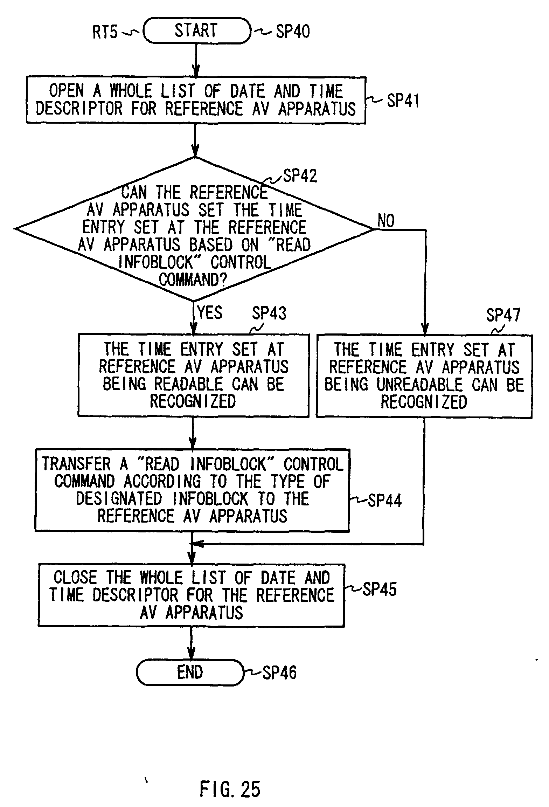

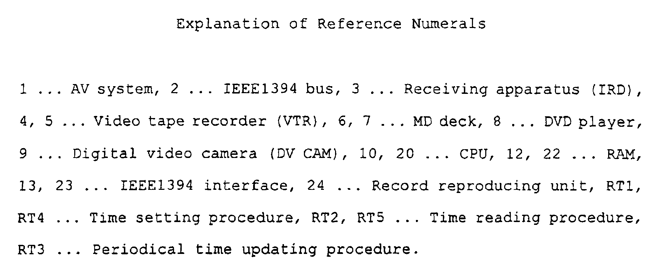

When the designated AV apparatus reads the time entry set in the reference AV apparatus, the CPU of the designated AV apparatus enters the time reading procedure RT5 in step SP40 as shown in Figure 25. In step SP41, the CPU of the designated AV apparatus transfers the "OPEN DESCRIPTOR", together with the sub-function of "READ OPEN", to the reference AV apparatus, to open a whole list of the date and time descriptor for the reference AV apparatus.

Subsequently, in step SP42, the CPU of the designated AV apparatus transfers a read infoblock control command according to the type of infoblock required for setting the time via the IEEE1394 bus 2 to the reference AV apparatus. The CPU of the designated AV apparatus determines whether or not the CPU of the designated AV apparatus can read the set time entry and transfers it to the designated AV apparatus, based on the infoblock control command, according to whether or not the CPU of the reference AV apparatus can read the designated infoblock from a list of the data and time descriptor.

If an affirmative result is obtained at this step SP42, it is indicated that the CPU of the reference AV apparatus can execute reading the time. Then, the CPU of the reference AV apparatus reads the infoblock representing the time entries according to the set time from the list, and transfers it to the CPU of the designated AV apparatus. In step SP43, the CPU of the designated AV apparatus can recognize that the designated AV apparatus can read the time entry set in the reference AV apparatus.

As a result, in step SP44, the CPU of the designated AV apparatus transfers a read infoblock (READ INFOBLOCK) control command according to the type of designated infoblock via the IEEE1394 bus 2 to the reference AV apparatus. The CPU of the designated AV apparatus reads the time entry set in the reference AV apparatus and proceeds to step SP45.

Subsequently, at this step SP45, the CPU of the designated AV apparatus transfers the "OPEN DESCRIPTOR", together with the sub-function of "CLOSE", to the CPU of the reference AV apparatus, to close a whole list of the date and time descriptor for the reference AV apparatus. Then, the CPU of the designated AV apparatus directly proceeds to step SP46 to terminate the time reading procedure RT5.

On the contrary, if a negative result is obtained in step SP42, it is indicated that the CPU of the reference AV apparatus cannot execute reading the time. Then, the CPU of the reference AV apparatus does not transfer the designated infoblock from a list of the date and time descriptor. In step SP47, the CPU of the designated AV apparatus can recognize that the designated AV apparatus cannot execute reading the time.

As a result, the CPU of the designated AV apparatus proceeds to step SP45, without reading any time entry from the CPU of the reference AV apparatus. The CPU of the designated AV apparatus transfers the "OPEN DESCRIPTOR", together with the sub-function of "CLOSE", to the CPU of the reference AV apparatus, to close a whole list of the date and time descriptor for the reference AV apparatus. Then, the CPU of the designated AV apparatus directly proceeds to step SP46 to terminate the time reading procedure RT5.

In this way, in this AV system 1, the designated AV apparatus transfers a predetermined infoblock control command to the reference AV apparatus connected via the IEEE1394 bus 2, as required. Only when the conditions where the time entry can be made public are satisfied, the designated AV apparatus can read the time entry from the reference AV apparatus, and reset its own time to be matched to the time based on the time entry read from the reference AV apparatus.

### (3-3) Operation and effects of the second embodiment

In the above configuration, among a plurality of AV apparatuses connected via the IEEE1394 bus 2 in this AV system 1, when the time entry set in the reference AV apparatus is set in the designated AV apparatus, the reference AV apparatus opens a whole list of the date and time descriptor for the designated AV apparatus, and transfers a read infoblock (READ INFOBLOCK) control command according to the type of infoblock required for the time setting to the designated AV apparatus.

Thereby, the designated AV apparatus can set the time entries according to the reference AV apparatus based on the read infoblock control command, and transfer a response indicating that the time entries have been set to the reference AV apparatus for recognition.

As a result, the reference AV apparatus can specify the designated AV apparatus which is an object for setting the time and transfers a write infoblock (WRITE INFOBLOCK) control command to the designated AV apparatus to reset the time entry set at present in the designated AV apparatus with the time entry according to the reference AV apparatus.

When the designated AV apparatus reads the time entry set in the reference AV apparatus, the designated AV apparatus opens a whole list of the date and time descriptor for the reference AV apparatus, and transfers a read infoblock (READ INFOBLOCK) control command according to the type of infoblock required for the time setting to the reference AV apparatus.

Thereby, the reference AV apparatus reads an infoblock representing the time entries according to the set time from the list, based on the read infoblock (READ INFOBLOCK) control command, and transfers it to the CPU of the designated AV apparatus. The designated AV apparatus can read the time entry set in the reference AV apparatus.

As a result, the designated AV apparatus can specify the reference AV apparatus that is an object for reading the time and read the time entry set at present only from the reference AV apparatus. In this way, the designated AV apparatus can reset the time entry set at present based on the time entry.

With the above configuration, among a plurality of AV apparatuses connected via the IEEE1394 bus 2 in this AV system 1, an AV/C command packet with the time entry added is sent and received between the reference AV apparatus and the designated AV apparatus which are arbitrarily specified. Consequently, the time entry set in the reference AV apparatus can be set in the designated AV apparatus, and the designated AV apparatus can read the time entry set in the reference AV apparatus. Thus, it is possible to provide an AV system 1 which enables the timing between designated AV apparatuses to be coordinated efficiently.

### (4) Other embodiments

In the above embodiments, the present invention is applied to the AV system 1. However, the present invention is not limited to the above form, and is applicable to a wide variety of other information processing apparatuses in which various information is sent or received between a first and a second electronic devices connected via a bus.

In the above embodiments, the first electronic device is a reference AV apparatus specified from among a plurality of AV apparatuses (a receiving apparatus 3, video tape recorders 4, 5, MD decks 6, 7, a DVD player 8 and a digital video camera 9), and the second electronic device is a designated AV apparatus specified other than the reference AV apparatus among the plurality of AV apparatuses. However, the present invention is not limited to these forms, and is applicable to a wide variety of first and second electronic devices such as home electronic appliances.

Further, in the above embodiments, an AV/C (Audio & Video/Control) digital interface command set corresponding to the IEEE1394 is applied as a predetermined format for sending and receiving the information between the reference AV apparatus and the designated AV apparatus. The present invention is not limited to this form, and is applicable to various other formats as long as the information is sent and received mutually between the reference AV apparatus and the designated AV apparatus, and the time entry can be transferred from both sides.

Further, in the above embodiments, the CPU provided on the reference AV apparatus (first electronic device) is first control means. The first time entry according to the time set in the reference AV apparatus is put into packets by an AV/C digital interface command set, and transferred via the IEEE1394 bus 2 to the designated AV apparatus (second electronic device). And the CPU provided on the designated AV apparatus (second electronic device) is second control means. Based on the first time entry transferred from the CPU (first control means) of the reference AV apparatus, the time of the designated AV apparatus is set. However, the present invention is not limited to this form, and is applicable to various other forms as the first and second control means as long as the reference AV apparatus specifies the designated AV apparatus, and the time entry set at present in the designated AV apparatus is reset with the time entry according to the reference AV apparatus.

Further, in the above embodiments, the CPU provided on the designated AV apparatus (first electronic device) is first control means. A read command is put into packets by an AV/C digital interface command set, and transferred via the IEEE1394 bus 2 to the reference AV apparatus (second electronic device). And the CPU provided on the reference AV apparatus (second electronic device) is second control means. Based on the read command transferred from the CPU (first control means) of the designated AV apparatus, the time entry according to the time set in the reference AV apparatus is put into packets by the AV/C digital interface command set, and transferred via the IEEE1394 bus 2, the CPU of the designated AV apparatus (first control means) reading the time entry transferred. However, the present invention is not limited to this form, and is applicable to various other forms as the first and second control means as long as the designated AV apparatus specifies the reference AV apparatus, and the time entry set at present can be read only from the reference AV apparatus.

Further, in the above embodiments, the CPU provided on the designated AV apparatus (first electronic device) is first control means. A read command which specifies a desired unit of time is put into packets by an AV/C digital interface command set, and transferred via the IEEE1394 bus 2 to the reference AV apparatus (second electronic device). And the CPU provided on the reference AV apparatus (second electronic device) is second control means. Based on the read command transferred from the CPU (first control means) of the designated AV apparatus, the time entry corresponding to a specified unit of time for the time set in the reference AV apparatus is put into packets by the AV/C digital interface command set, and transferred via the IEEE1394 bus 2, the CPU of the designated AV apparatus (first control means) updating the time entry according to the time set in the designated AV apparatus, based on the time entry transferred. However, the present invention is not limited to this form, and is applicable to various other forms as the first and second control means as long as the designated AV apparatus specifies the reference AV apparatus, receives the time entry representing the specified unit of time for the time entries set at present only from the reference AV apparatus and updates the time entry set at present based on the time entry.

Further, in the above embodiments, in the AV system 1 to which the present invention is applied, an AV/C command packet with the time entry added is sent and received mutually between the first and second electronic devices connected via the IEEE1394 bus 2. However, the present invention is not limited to this form, but if the first electronic device and/or the second electronic device have a recording function, the time entry which is obtained based on the time setting procedure RT1, the time reading procedure RT2 and the periodical time updating procedure RT3 may be recorded on the recording medium.

Further, in the above embodiments, in the time setting procedure RT1 (Figure 13), the time reading procedure RT2 (Figure 15) and the periodical time updating procedure RT3 (Figure 18), an AV/C command packet (Figure 5) which has described the "SPECIFIC INQUIRY" in the command type/response CT/RC is transferred via the IEEE bus 2 to the CPU of the designated AV apparatus (or reference AV apparatus) (step SP1 in Figure 13, step SP11 in Figure 15, and step SP21 in Figure 18), when starting the processing, the designated AV apparatus (or reference AV apparatus) is inquired as to whether or not it can be incremented (step SP2 in Figure 13, step SP12 in Figure 15, and step SP22 in Figure 18). However, the present invention is not limited to the above form. The CPU of the reference AV apparatus (designated AV apparatus) may directly proceed to step SP3 in Figure 13, step SP13 in Figure 15, and step SP23 in Figure 18, without inquiring as to whether or not implemented, when starting the processing, whereby the processing can be performed more efficiently.

### INDUSTRIAL APPLICABILITY

An information processing system and method, as well as a recording medium, and an AV system in which a plurality of AV apparatuses which are connected via the IEEE1394 bus area applicable industrially.

## Claims

1. An information processing apparatus for forwarding the information to other information processing apparatus connected via a bus, comprising:
time entry generating means for generating the time entry; and
control means for packeting said time entry in a predetermined format, and transferring it via said bus to said other information processing apparatus,
characterized in that a packet of said format has a command area for indicating the kind of a command at a predetermined location, and a parameter area for the parameters of said command, and said control means allocates said time entry to the parameter area of said packet.

2. The information processing apparatus according to claim 2, characterized in that said format is an AV/C (Audio & Video/Control) digital interface command set.

3. An information processing apparatus for receiving a packet with a format having a command area for indicating the kind of a command, and a parameter area for the parameters of said command via a bus, characterized by comprising:
time entry generating means for generating the time entry;
receiving means for receiving the packet of said format;
command extracting means for extracting a command allocated to the command area of the received packet;
discriminating means for discriminating whether or not said packet is the time entry, based on said extracted command;
parameter extracting means for extracting the time entry from the parameter area of said packet, when said packet is discriminated to be the time entry by the discriminating means; and
time-of-day adjusting means for adjusting the time entry which said time entry generating means generates, based on said time entry extracted.

4. The information processing apparatus according to claim 3, characterized in that said format is an AV/C (Audio & Video/Control) digital interface command set.

5. An information processing apparatus for sending and receiving the information to and from the other information processing apparatus connected via a bus, characterized by comprising:
time entry generating means for generating the time entry;
controlling means for packeting a read command for reading the time entry according to the time-of-day which has been set at the other information processing apparatus in a predetermined format, and transferring it via said bus to said other information processing apparatus; and
receiving means for receiving the time entry read out upon said read command from said other information processing apparatus, packeted in said format and transferred.

6. The information processing apparatus according to claim 5, characterized in that a packet of said format has a command area for indicating the kind of a command at a predetermined location, and a parameter area for the parameters of said command.

7. The information processing apparatus according to claim 6, characterized by further comprising time adjusting means for adjusting the time entry which said time entry generating means generates, based on said received time entry.

8. The information processing apparatus according to claim 5, characterized in that said read command specifies a predetermined unit of time.

9. An information processing method for forwarding the information to the other information processing apparatus connected via a bus, comprising:
a first step of generating the time entry; and
a second step of packeting said time entry in a predetermined format, and transferring it via said bus to the other information processing apparatus,
characterized in that a packet of said format has a command area for indicating the kind of a command at a predetermined location, and a parameter area for the parameters of said command, said second step further comprising allocating said time entry to the parameter area of said packet.

10. The information processing method according to claim 9, characterized in that said format is an AV/C (Audio & Video/Control) digital interface command set.

11. An information processing method for receiving a packet with a format having a command area for indicating the kind of a command, and a parameter area for the parameters of said command via a bus, characterized by comprising:
a first step of generating the time entry;
a second step of receiving the packet of said format;
a third step of extracting a command allocated to the command area of said received packet;
a fourth step of discriminating whether or not said packet is the time entry, based on said extracted command;
a fifth step of extracting said time entry from the parameter area of said packet, when said packet is discriminated to be the time entry; and
a sixth step of adjusting the time entry generated at the first step, based on said time entry extracted.

12. The information processing method according to claim 11, characterized in that said format is an AV/C (Audio & Video/Control) digital interface command set.

13. An information processing method for sending and receiving the information to and from the other information processing apparatus connected via a bus, characterized by comprising:
a first step of generating the time entry;
a second step of packeting a read command for reading the time entry according to the time-of-day which has been set at said other information processing apparatus in a predetermined format, and transferring it via said bus to said other information processing apparatus; and
a third step of receiving the time entry read out upon said read command from said other information processing apparatus, packeted in said format and transferred.

14. The information processing method according to claim 13, characterized in that a packet of said format has a command area for indicating the kind of a command at a predetermined location, and a parameter area for the parameters of said command.

15. The information processing method according to claim 13, characterized by further comprising a fourth step of adjusting the time entry generated at the first step, based on said time entry received.

16. The information processing method according to claim 13, characterized in that at said second step, said read command specifies a predetermined unit of time.

17. An information processing system for sending and receiving the information between a first and a second electronic devices connected via a bus, characterized by comprising:
first controlling means which is provided in said first electronic device for packeting the first time entry according to the time-of-day which has been set at said first electronic device in a predetermined format, and transferring it via said bus to said second electronic device; and
second controlling means, which is provided in said second electronic device, for setting the time-of-day of said second electronic device based on said first time entry transferred from said first control means.

18. The information processing system according to claim 17, characterized in that a packet of said format has a command area for indicating the kind of a command at a predetermined location, and a parameter area for the parameters of said command, and said first control means allocates said first time entry to the parameter area of said packet.

19. The information processing system according to claim 18, characterized in that said format is an AV/C (Audio & Video/Control) digital interface command set.

20. An information processing system for sending and receiving the information between a first and a second electronic devices connected via a bus, characterized by comprising:
first controlling means, which is provided in said first electronic device, for packeting a read command in a predetermined format, and transferring it via said bus to said second electronic device; and
second controlling means, which is provided in said second electronic device, for packeting the time entry according to the time-of-day set at said second electronic device in said format and transferring it on the basis of said read command transferred from said first controlling means;
in which said first control means reads the time entry transferred via said bus from said second control means.

21. The information processing system according to claim 20, characterized in that a packet of said format has a command area for indicating the kind of a command at a predetermined location, and a parameter area for the parameters of said command, said first control means allocates the read command to the command area of said packet, and said second control means allocates the time entry to the parameter area of said packet for a response command.

22. The information processing system according to claim 21, characterized in that said format is an AV/C (Audio & Video/Control) digital interface command set.

23. The information processing system according to claim 21, characterized in that said first control means resets the time entry according to the time-of-day set at said first electronic device, based on said time entry transferred via said bus from said second control means.

24. The information processing system according to claim 23, characterized in that a packet of said format has a command area for indicating the kind of a command at a predetermined location, and a parameter area for the parameters of said command, said first control means allocates said read command to said command area of said packet, and said second control means allocates said time entry to said parameter area of a response command of said packet.

25. The information processing system according to claim 24, characterized in that said format is an AV/C (Audio & Video/Control) digital interface command set.

26. An information processing system for sending and receiving the information between a first and a second electronic devices connected via a bus, comprising:
first controlling means, which is provided in said first electronic device, for packeting a read command for specifying a desired time unit in a predetermined format, and transferring it via said bus to said second electronic device; and
second controlling means, which is provided in said second electronic device, for packeting the time entry corresponding to the specified time unit among the time-of-day set at said second electronic device in said format, and transferring it, based on said read command transferred from said first control means,
characterized in that said first control means updates the time entry according to the time-of-day set at said first electronic device, based on said time entry transferred via said bus from said second control means.

27. The information processing system according to claim 26, characterized in that a packet of said format has a command area for indicating the kind of a command at a predetermined location, and a parameter area for the parameters of said command, said first control means allocates said read command to said command area of said packet, and said second control means allocates said time entry to said parameter area of a response command of said packet.

28. The information processing system according to claim 27, characterized in that said format is an AV/C (Audio & Video/Control) digital interface command set.

29. The information processing system according to claim 27, characterized in that said second control means allocates a wait command as said response command for forming the packet in said format, before transferring said time entry, and said first control means is recognized in a wait state for a predetermined time until said time entry is transferred, based on said wait command provided from said second control means.

30. An information processing method for sending and receiving the information between a first and a second electronic devices connected via a bus, characterized by comprising:
a first step of packeting the first time entry according to the time-of-day set in said first electronic device in a predetermined format, and transferring it via said bus to said second electronic device; and
a second step of setting the time-of-day of said second electronic device, based on said first time entry transferred from said first electronic device.

31. The information processing method according to claim 30, characterized in that a packet of said format has a command area for indicating the kind of a command at a predetermined location, and a parameter area for the parameters of said command, and said first electronic device allocates said first time entry to said parameter area of said packet.

32. The information processing method according to claim 31, characterized in that said format is an AV/C (Audio & Video/Control) digital interface command set.

33. An information processing method for sending and receiving the information between a first and a second electronic devices connected via a bus, characterized by comprising:
a first step of packeting a read command set at the first electronic device in a predetermined format, and transferring it via said bus to said second electronic device;
a second step of packeting the time entry according to the time-of-day set at said second electronic device in said format, based on said read command transferred from said first electronic device, and transferring it via said bus to said first electronic device; and
a third step in which said first electronic device reads said time entry transferred from said second electronic device.

34. The information processing method according to claim 33, characterized in that a packet of said format has a command area for indicating the kind of a command at a predetermined location, and a parameter area for the parameters of said command, and said first step comprising allocating said read command to said command area of said packet, and said second step comprising allocating said time entry to said parameter area of said packet for a response command.

35. The information processing method according to claim 34, characterized in that said format is an AV/C (Audio & Video/Control) digital interface command set.

36. The information processing method according to claim 33, characterized by further comprising a fourth step of said first electronic device resetting the time entry according to the time-of-day set at said first electronic device, based on said time entry transferred from said second electronic device.

37. The information processing method according to claim 36, characterized in that a packet of said format has a command area for indicating the kind of a command at a predetermined location, and a parameter area for the parameters of said command, and said first step comprising allocating said read command to said command area of said packet, and said second step comprising allocating said time entry to said parameter area of said packet for a response command.

38. The information processing method according to claim 37, characterized in that said format is an AV/C (Audio & Video/Control) digital interface command set.

39. An information processing method for sending and receiving the information between a first and a second electronic devices connected via a bus, characterized by comprising:
a first step of packeting a read command for specifying a desired time unit set at said first electronic device in a predetermined format, and transferring it via said bus to said second electronic device;
a second step of packeting the time entry corresponding to said specified time unit among the time-of-day set at said second electronic device in said format, based on said read command transferred from said first electronic device, and transferring it via said bus to said first electronic device; and
a third step in which said first electronic device updates the time entry according to the time-of-day set at said first electronic device, based on said time entry transferred from said second electronic device.

40. The information processing method according to claim 39, characterized in that a packet of said format has a command area for indicating the kind of a command at a predetermined location, and a parameter area for the parameters of said command, and said first step comprising allocating said read command to said command area of said packet, and said second step comprising allocating said time entry to said parameter area of said packet for a response command.

41. The information processing method according to claim 40, characterized in that said format is an AV/C (Audio & Video/Control) digital interface command set.

42. The information processing method according to claim 40, characterized in that said second step comprises allocating a wait command as said response command for forming the packet in said format, before transferring said time entry, and said first electronic device is recognized in a wait state for a predetermined time until said time entry is transferred, based on said wait command provided from said second electronic device.

43. A recording medium characterized by having recorded a program for executing:
a first step of packeting the first time entry according to the time-of-day which has been set in the first electronic device in a predetermined format, and transferring it via said bus to said second electronic device; and
a second step of setting the time-of-day of said second electronic device based on said first time entry transferred from said first electronic device.

44. The recording medium according to claim 43, characterized in that a packet of said format has a command area for indicating the kind of a command at a predetermined location, and a parameter area for the parameters of said command, and said first control means allocates said first time entry to said parameter area of said packet of said packet.

45. The recording medium according to claim 44, characterized in that said format is an AV/C (Audio & Video/Control) digital interface command set.

46. A recording medium characterized by having recorded a program for executing:
a first step of packeting a read command set at a first electronic device in a predetermined format, and transferring it via a bus to a second electronic device;
a second step of packeting the time entry according to the time-of-day set at said second electronic device in said format, based on said read command transferred from said first electronic device, and transferring it via said bus to said first electronic device; and
a third step in which said first electronic device reads said time entry transferred from the second electronic device.

47. The recording medium according to claim 46, characterized in that a packet of said format has a command area for indicating the kind of a command at a predetermined location, and a parameter area for the parameters of said command, and said first step comprising allocating said read command to said command area of said packet, and said second step comprising allocating said time entry to said parameter area of said packet for a response command.

48. The recording medium according to claim 47, characterized in that said format is an AV/C (Audio & Video/Control) digital interface command set.

49. The recording medium according to claim 46, characterized by further comprising a fourth step of said first electronic device resetting the time entry according to the time-of-day set at said first electronic device, based on said time entry transferred from said second electronic device.

50. The recording medium according to claim 49, characterized in that a packet of said format has a command area for indicating the kind of a command at a predetermined location, and a parameter area for the parameters of said command, and said first step comprising allocating said read command to said command area of said packet, and said second step comprising allocating said time entry to said parameter area of said packet for a response command.

51. The recording medium according to claim 50, characterized in that said format is an AV/C (Audio & Video/Control) digital interface command set.

52. A recording medium characterized by having recorded a program for executing:
a first step of packeting a read command for specifying a desired time unit set at a first electronic device in a predetermined format, and transferring it via a bus to a second electronic device;
a second step of packeting the time entry corresponding to the specified time unit of the time-of-day set at said second electronic device in said format, based on said read command transferred from said first electronic device, and transferring it via said bus to said first electronic device; and
a third step in which said first electronic device updates the time entry according to the time-of-day set at said first electronic device, based on said time entry transferred from said second electronic device.

53. The recording medium according to claim 52, characterized in that a packet of said format has a command area for indicating the kind of a command at a predetermined location, and a parameter area for the parameters of said command, and said first step comprising allocating said read command to the command area of said packet, and said second step comprising allocating said time entry to the parameter area of said packet for a response command.

54. The recording medium according to claim 53, characterized in that said format is an AV/C (Audio & Video/Control) digital interface command set.

55. The recording medium according to claim 53, characterized in that said second step comprises allocating a wait command as said response command for forming the packet in said format, before transferring said time entry, and said first electronic device is recognized in a wait state for a predetermined time until said time entry is transferred, based on said wait command provided from said second electronic device.
